# EUROPÄISCHE PATENTSCHRIFT

(11) **EP 2 491 159 B1**
(45) Veröffentlichungstag und Bekanntmachung des Hinweises auf die Patenterteilung: **09.10.2019**
(21) Anmeldenummer: 10739364.7
(22) Anmeldetag: 03.08.2010
(51) Int. Cl.: D21G 3/00, C23C 4/10, C23C 4/06

(54) **VERWENDUNG EINES SPRITZPULVERS ZUR CERMET-BESCHICHTUNG VON RAKELKLINGEN**
USE OF A SPRAY POWDER FOR THE CERMET COATING OF DOCTOR BLADES
UTILISATION D'UNE POUDRE À PULVÉRISER POUR APPLIQUER UN REVÊTEMENT DE CERMET À DES LAMES DE RACLES

(30) Priorität: 23.09.2009 DE 102009029697
(43) Veröffentlichungstag der Anmeldung: 29.08.2012
(73) Patentinhaber: Voith Patent GmbH, 89522 Heidenheim (DE)
(72) Erfinder: MAYR, Wolfgang Peter, A-1120 Wien (AT); BERENDES, Antje, 88368 Bergatreute (AT); BISCHOF, Hubert, A-8680 Mürzzuschlag (AT); ETSCHMAIER, Alexander, A-8692 Neuberg (AT); GAMSJÄGER, Norbert, A-2721 Bad Fischau (AT)
(86) Internationale Anmeldenummer: PCT/EP2010/061252
(87) Internationale Veröffentlichungsnummer: WO 2011/035965

(56) Entgegenhaltungen:
- EP-A2- 1 227 169
- WO-A1-01/12431
- WO-A1-2004/038098
- GB-A- 1 456 644
- US-A- 4 013 453
- US-A1- 2007 243 335

## Beschreibung

Die Erfindung betrifft Rakel für Maschinen zur Papierherstellung und bezieht sich im Besonderen auf die Beschichtung von Rakelklingen zur Verbesserung der Rakelklingenoberfläche.

Aus US 4 013 453 A, GB 1 456 644 A und WO 2004/038098 A1 sind Spritzpulver in Form von Cermets bekannt.

In der Regel weist die im Papierherstellungsprozess produzierte Faservliesbahn, die sogenannte Rohpapierbahn, noch nicht die für die jeweils zu produzierende Papiersorte erforderlichen Oberflächeneigenschaften auf und muss entsprechend bearbeitet werden.

Zum Glätten der Papierbahnoberfläche wird auf diese eine meist pastenförmige Strichlage aus Pigmenten, Bindemitteln und Hilfsstoffen aufgestrichen. Das Streichen der Papierbahn kann in einem gesonderten Arbeitsgang erfolgen, wird üblicherweise jedoch in den Papierherstellungsprozess durch Einbinden eines Streichwerks in die Papiermaschine integriert. Glatte Papieroberflächen werden mit dem Rakelstreichverfahren erzielt, bei dem die Streichfarbe zunächst im Überschuss auf das Papier aufgebracht und dann mit einer Rakelklinge abgerakelt wird. Durch die von der als Streichklinge bezeichneten Rakelklinge auf die Streichfarbe ausgeübten Druck werden die Vertiefungen der Papieroberfläche mit Strich aufgefüllt und eine gleichmäßige Oberfläche des gestrichenen Papiers erzielt.

Bei bestimmten Papieren wie beispielsweise Hygienepapieren wird die Oberfläche der Faservliesbahn durch Führen des Vlieses über eine als Kreppmesser bezeichnete Rakel strukturiert.

Ferner werden Rakel zum Beschaben von Walzen verwendet, um deren Oberflächen von Papierrückständen und anderen Verunreinigungen frei zu halten und somit einer Verschlechterung der Papierqualität im Laufe des Herstellungsprozesses vorzubeugen.

Aufgrund des hohen Drucks den die Rakelklinge auf die Papierbahn ausübt, in der Regel beträgt der Anpressdruck 150 N/m (Angabe in Anpresskraft bezogen auf die Länge der Rakelklinge) und mehr, werden hohe Anforderungen an die Verschleißfestigkeit der Rakelklinge gestellt. Die für die Oberflächenbearbeitung der Papierbahn verwendeten Rakelklingen werden daher häufig aus einem hochfesten Stahl gefertigt.

Zum Verbessern der Verschleißfestigkeit, d.h. zum Verringern der Verschleißrate, der Rakelklinge, ist es bekannt, die Oberflächen von Rakelklingen in den Bereichen, an denen diese zur Auflage an der Papierbahn bzw. zum Kontakt mit dem Strichmaterial vorgesehen sind, mit einer Beschichtung zu versehen, die eine höhere Verschleißfestigkeit als das Grundmaterial der Rakelklinge aufweist. Cermet-Beschichtungen haben sich dabei als besonders verschleißfest bewährt. Mit dem Begriff Cermet wird ein Verbundwerkstoff bezeichnet, bei dem Hartstoffe in einer metallischen Matrix eingebettet sind. Als Hartstoffe werden in Cermets sowohl keramische als auch nichtkeramische Werkstoffe verwendet.

Cermets werden üblicherweise mit thermischen Beschichtungsverfahren wie z.B. Plasmaspritzen, Hochgeschwindigkeits-Flammspritzen (Akronym HVOF, abgeleitet von der englischsprachigen Bezeichnung High Velocity Oxygen Fuel Spraying) oder Hochgeschwindigkeits-Luft-Brennstoff-Flammspritzen (Akronym HVAF, abgeleitet von der englischsprachigen Bezeichnung High Velocity Air Fuel Spraying) auf einen Rakelklingengrundkörper aufgebracht. Bei diesen Verfahren wird der Brennkammer oder der Expansionsdüse der Beschichtungseinrichtung ein pulverförmiger Spritzwerkstoff zugeführt. Zur Herstellung von Cermets besteht das zugeführte Spritzpulver aus einem Gemenge von Körnern für die Ausbildung der metallischen Matrix (im Folgenden als Matrixpulver bezeichnet) und Hartstoffkörnern (im Folgenden als Hartstoffpulver bezeichnet) zur Einbettung in die metallische Matrix. Unter einem Gemenge ist hierbei ein Gemisch granuler Werkstoffe zu verstehen. Zur Ausbildung einer zähen Matrix werden für das Matrixpulver vorzugsweise Hartlegierungen auf Eisen-, Nickel- und Cobaltbasis verwendet. Neben den ursprünglich bevorzugten arteigenen Hartphasen wie Carbiden, Nitriden, Boriden oder Siliciden werden zunehmend artfremde Hartstoffe wie beispielsweise Wolframcarbide oder Chromcarbid eingesetzt.

Derzeit werden Spritzpulver verwendet, bei denen die Körner des Matrixpulvers typischerweise Größen zwischen etwa 10 und 63 µm aufweisen. Die Korngrößen des Hartstoffpulvers bestimmen sich in der Regel nach dem jeweiligen Hartstoff. Bei agglomerierten und gesinterten Pulvern liegt die Korngrößenverteilung des Hartstoffs zum Erzielen harter Cermet-Oberflächen bei Verwendung von Wolframcarbid als Hartstoff üblicherweise im Bereich zwischen etwa 1 und 2,5 µm und bei Verwendung von Chromcarbid oberhalb von etwa 3 µm. Mit entsprechenden Korngrößen hergestellte Cermet-Beschichtungen weisen eine sehr hohe Verschleißbeständigkeit gegenüber abrasiven, adhäsiven und erosiven Beanspruchungen auf.

Nachteilig an Spritzpulvern mit entsprechenden Korngrößenverteilungen ist jedoch die aus den verwendeten Korngrößen und insbesondere aus den Korngrößen der Hartstoffe resultierende Rauheit der gespritzten Beschichtungsoberflächen, die eine aufwändige Nachbearbeitung erfordert. Außerdem hat sich gezeigt, dass zwischen der Korngröße der Hartstoffe und dem Spritzpulververbrauch ein Zusammenhang besteht, wobei der Overspray, d.h. der Anteil des Spritzpulvers, der nicht Bestandteil der Beschichtung wird, mit der Korngröße zunimmt.

Ausgehend von dem Dargelegten ist es daher wünschenswert, ein Spritzpulver zur Herstellung von Cermet-Beschichtungen mit thermischen Beschichtungsverfahren anzugeben, das die Herstellung von Cermet-Beschichtungen mit verbesserten Eigenschaften ermöglicht.

Hierzu wird gemäß der Erfindung ein Spritzpulver für die Herstellung einer Cermet-Beschichtung auf einer Rakelklingenoberfläche gemäß dem Wortlaut des Anspruchs 1 verwendet..

Die Verwendung eines Metallpulvers mit der angegebenen Korngrößenverteilung ermöglicht die Ausbildung einer Beschichtung mit geringer Porosität, in der die Hartstoffe gleichmäßig verteilt sind. Hartstoffkörner mit einer Korngrößenverteilung, bei der 90 % der Körner eine Größe von weniger als 2 µm aufweisen, besitzen ein gutes Dispersionsverhalten in einer metallischen Matrix und liegen in der mit dem Spritzpulver hergestellten Cermet-Beschichtung somit fein verteilt vor. Die gleichmäßige, feine Verteilung der Hartstoffkörner in der metallischen Matrix ermöglicht die Ausbildung einer Beschichtungsoberfläche geringer Rauheit, die wenig Nachbearbeitung erfordert. Aufgrund des guten Dispersionsverhaltens und der daraus resultierenden feinen und gleichmäßigen Verteilung der Hartstoffkörper in der Metallmatrix der Beschichtung unterliegt der Anteil der Hartstoffe am Beschichtungsvolumen nur geringen lokalen Schwankungen. Damit wird die auf die Beschichtungsoberfläche ausgeübte Belastung gleichmäßig von den Hartstoffkörnern abgefangen, wodurch die Verschleißfestigkeit der Beschichtung verbessert wird. Ferner werden, da sich der Overspray mit kleiner werdenden Korngrößen der Hartstoffe reduziert, die Materialverluste beim Aufbringen der Cermet-Beschichtung mit einem Spritzpulver gemäß der angegebenen Ausführungsform reduziert.

Die Homogenität der Einbettung von Hartstoffkörnern in die Metallmatrix kann durch eine enge Korngrößenverteilung verbessert werden. Gemäß der Erfindung wird ein Metallpulver verwendet, bei dem wenigstens 90 % der Körner Größen von mehr als 10 µm und vorzugsweise von mehr als 18 µm aufweisen. In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell als nicht abschließende Aufzählung von Merkmalen, wie z.B. Verfahrensschritten, Einrichtungen, Bereichen, Größen und dergleichen aufzufassen sind, und in keiner Weise das Vorhandensein anderer oder zusätzlicher Merkmale oder Gruppierungen von anderen oder zusätzlichen Merkmalen ausschließen.

Zur Ausbildung eines möglichst homogen in der Beschichtung verteilten Hartstoffanteils werden gemäß der Erfindung Hartstoffpulver mit einer engen Korngrößenverteilung verwendet, wobei Ausführungsformen, bei denen 90 % der Körner des Hartstoffpulvers Größen von mehr als 15 nm und vorzugsweise von mehr als 0,5 µm aufweisen, bevorzugt werden.

Um die Wahrscheinlichkeit des Herauslösens von Hartstoffkörnern aus der Metallmatrix einer Cermet-Beschichtung möglichst gering zu halten, wird ein möglichst zähes Matrixmaterial gewählt. Gemäß einer Ausführungsform umfasst das Metallpulver hierfür wenigstens zu 80 % Material, das ausgewählt ist aus einer Gruppe, welche Eisen, Cobalt, Kupfer, Nickel, Chrom und deren Legierungen sowie Mischungen davon enthält. Bei einer bevorzugten Ausführungsform enthält das im Spritzpulver verwendete Metallpulver zu wenigstens 80 % Material ausgewählt aus einer Gruppe, die Nickel (Ni), Nickel-Chrom-Legierungen (NiCr), Cobalt-Chrom-Legierungen (CoCr) und Legierungen des Systems Nickel-Cobalt-Chrom (NiCoCr) enthält. Nickel, wie auch die angegebenen Legierungen, weist beim Aufbringen mit einem thermischen Beschichtungsverfahren ein Fließverhalten auf, das einen Aufbau homogener Beschichtungen geringerer Porosität unterstützt.

Nach einer weiteren Ausführungsform weist das im Spritzpulver verwendete Hartstoffpulver zu wenigstens 80 % Material auf, das aus einer Gruppe ausgewählt ist, die Carbide, Nitride, Carbonitride, Boride, und keramische Metalloxide enthält. Bei einer weiteren Ausführungsform enthält das Hartstoffpulver Carbide, die aus der Gruppe ausgewählt sind, die Carbide und Mischcarbide der Elemente Wolfram (W), Chrom (Cr), Vanadium (V), Tantal (Ta), Titan (Ti), Molybdän (Mo), Niob (Nb) und Bor (B) umfasst. Bei einer weiteren Ausführungsform weisen 90 % der in dem Hartstoffpulver enthaltenen Carbidkörner Größen von mehr als 0,4 µm und vorzugsweise von mehr als 0,6 µm auf und wenigstens 90 % der Carbidkörner weisen Größen von weniger als 1,0 µm und vorzugsweise von weniger als 0,8 µm auf. Eine entsprechend enge Korngrößenverteilung der Carbide begünstigt eine gleichmäßige Dispersion der Hartstoffkörner in der Metallmatrix der Cermet-Beschichtung und führt zu einer gleichmäßigen Verteilung des Hartstoffanteils innerhalb der Cermet-Beschichtung und somit auch an deren Oberfläche.

Gemäß einer weiteren vorteilhaften Ausführungsform umfasst das in dem Spritzpulver verwendete Hartstoffpulver keramische Metalloxide, die aus einer Gruppe ausgewählt sind, die keramische Metalloxide der Elemente Chrom (Cr), Aluminium (Al), Titan (Ti), Yttrium (Y) und Zirkonium (Zr) sowie Mischungen daraus enthält. Bei einer weiteren Ausführungsform weisen wenigstens 90 % der Metalloxidkörner des Hartstoffpulvers Größen von mehr als 15 nm und vorzugsweise von mehr als 0,5 µm auf und wenigstens 90 % der Metalloxidkörner weisen Größen von weniger als 2,0 µm und vorzugsweise von weniger als 0,8 µm auf.

Eine weitere Ausführungsform betrifft eine Rakelklinge mit einer Cermet-Beschichtung, die mit einem thermischen Beschichtungsverfahren unter Verwendung eines wie oben bezeichneten Spritzpulvers hergestellt ist, im Einzelnen gemäß dem unabhängigen Anspruch 9.

Weitere Merkmale der Erfindung ergeben sich aus der folgenden Beschreibung von Ausführungsbeispielen in Verbindung mit den Ansprüchen sowie den Figuren. Die einzelnen Merkmale können bei einer Ausführungsform gemäß der Erfindung je für sich oder zu mehreren verwirklicht sein. Bei der nachfolgenden Erläuterung einiger Ausführungsbeispiele der Erfindung wird auf die beiliegenden Figuren Bezug genommen, von denen
Figur 1 ein Beispiel für eine beschichtete Rakelklinge in einem schematischen Querschnitt vorstellt, und
Figur 2 eine schematische Darstellung zur Veranschaulichung der thermischen Beschichtung von Rakelklingen zeigt.

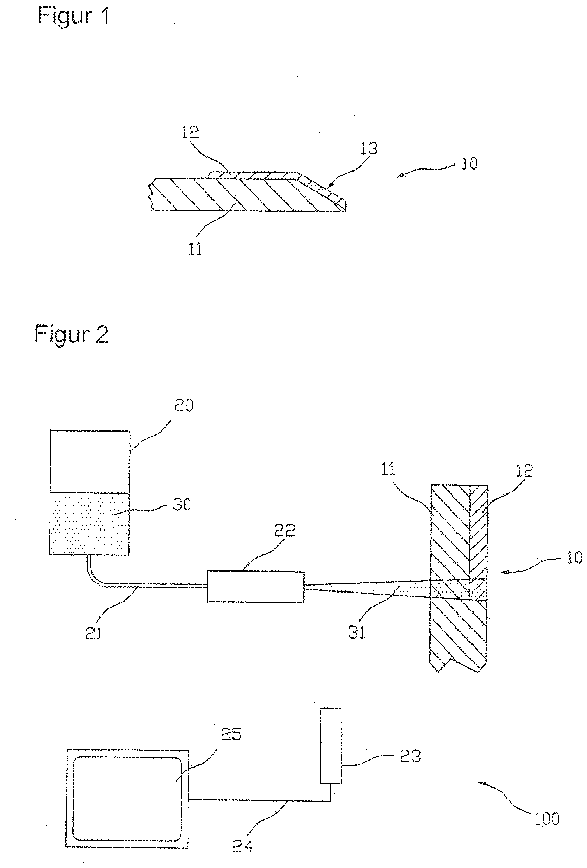

Die schematische Darstellung von Figur 1 zeigt einen Querschnitt durch den vorderen Bereich einer mit einer Beschichtung 12 versehenen Rakelklinge 10. Die Beschichtung 12 nimmt wenigstens den Teil der Rakelklinge 10 ein, der mit dem Faservlies der Papierbahn bzw. einem darauf aufgebrachten Strichmaterial in Berührung kommt. Die Rakelklinge 10 weist einen Grundkörper 11 auf, der beispielsweise aus einem Federstahl gebildet sein kann, und auf dem die verschleißfeste Cermet-Beschichtung 12 aufgebracht ist. Am vorderen Bereich der Rakelklinge ist eine Fase 13 ausgebildet, die allgemein als Wate bezeichnet wird. In der Regel überdeckt die Cermet-Beschichtung 12 den Grundkörper 11, wie in Figur 1 dargestellt, auch im Bereich der Wate 13. Um die für den jeweiligen Produktionsschritt, bei dem die Rakel 10 eingesetzt wird, erforderliche Rauheit der Cermet-Beschichtungsoberfläche herzustellen, wird diese in der Regel nach dem Aufbringen der Beschichtung geschliffen. Neben einem Glattschleifen der Beschichtungsoberfläche können auch die Kanten der Beschichtung 12 wie gezeigt durch Schleifen gebrochen werden, um so eine mögliche Beeinträchtigung der Papierbahnoberfläche zu vermeiden.

Figur 2 veranschaulicht eine Anordnung 100 zur thermischen Beschichtung einer Rakelklinge. Die Anlage 100 umfasst einen Behälter 20 zur Bevorratung des Spritzpulvers 30, das über eine Zufuhreinrichtung 21 zum Spritzbrenner 22, der häufig pistolenförmig ausgebildet ist, gefördert wird. In dem Spritzbrenner 22 wird ein sehr heißes Gas oder Plasma erzeugt, das über eine Expansionsdüse aus dem Spritzbrenner 22 austritt. Das der Brennkammer oder der Düse zugeführte Spritzmittel wird von dem Gasstrom mitgerissen, wobei der Metallpulveranteil des Spritzpulvers in dem heißen Gasstrom an- bzw. aufgeschmolzen wird, um zusammen mit den Partikeln des Hartstoffpulvers auf die Oberfläche des zu beschichtenden Rakelklingenkörpers 11 geschleudert zu werden. Der Rakelklingengrundkörper 11 wird hierbei nicht angeschmolzen, sondern nur in geringem Maße thermisch belastet. Zur Überwachung der Beschichtungsparameter weist die Anlage 100 eine Flammüberwachung 23 auf, deren Messwerte über eine Signal- bzw. Datenverbindung 24 an eine Anzeigevorrichtung 25 übertragen und darauf sichtbar gemacht werden können. Alternativ können die über die Flammüberwachung 23 erhaltenen Messsignale auch zur Steuerung des Spritzbrenners und der Zufuhr des Spritzpulvers 30 verwendet werden. Der von dem heißen Gasstrom mitgeführte Partikelstrahl 31 wird vorzugsweise so über die zu beschichtende Oberfläche des Rakelklingengrundkörpers 11 geführt, dass die Beschichtung stufenweise in mehreren Lagen aufgebaut wird.

Als Spritzpulver 30 wird gemäß einer Ausführungsform ein Gemenge aus einem Metallpulver und einem Hartstoffpulver verwendet, wobei das Metallpulver eine Korngrößenverteilung von -63/+10 µm aufweist. Damit sind wenigstens 90 % der Körner des Metallpulvers kleiner als 63 µm, wodurch durch ein gutes Aufschmelzen der Metallkörner in heißem Gasstrom gewährleistet ist. Die Bestimmung der Korngrößen kann z.B. mit einem Fischer Subsieve Sizer erfolgen. Um ein Verflüssigen der Metallkörner während des Beschleunigens auf die Oberfläche des Rakelklingengrundkörpers 11 zu vermeiden, wird eine möglichst enge Korngrößenverteilung des Metallpulvers gewählt. Bei der angegebenen Korngrößenverteilung sind daher 90 % der Körner des Metallpulvers größer als 10 µm. Bei einer weiteren Ausführungsform wird die Korngrößenverteilung des Metallpulvers mit -48/+18 µm noch enger gewählt, wodurch sichergestellt wird, dass die überwiegende Mehrheit der Metallpulverkörner in etwa denselben Aufschmelzzustand beim Auftreffen auf die Oberfläche des Rakelklingengrundkörpers aufweisen.

Zur Verbesserung der Verschleißfestigkeit der Beschichtung werden bisher Hartstoffkörner verwendet, die je nach Werkstoff Korngrößen bis 2,5 µm oder auch über 3,0 µm aufweisen. Diese Korngrößen werden bevorzugt, da sie eine gute Einbindung in die Metallmatrix der Cermet-Beschichtung aufweisen und aufgrund ihrer Größe einen Großteil der auf die Beschichtungsoberfläche wirkenden Belastung abfangen. Es hat sich jedoch gezeigt, dass die Größe der Hartstoffpartikel bzw. -körner nicht entscheidend zur Ausbildung einer verschleißfesten Oberfläche ist. Vielmehr wird die Verschleißfestigkeit einer Cermet-Beschichtung wesentlich durch die Homogenität der Verteilung der Hartstoffkörner in der Metallmatrix bestimmt. Wichtig hierfür ist ein gutes Dispersionsvermögen der Hartstoffkörner in der Metallmatrix. Es hat sich gezeigt, dass Hartstoffpulver mit einer geringeren mittleren Korngröße besser in der Metallmatrix dispergieren als solche mit einer höheren mittleren Korngröße. Gemäß einer Ausführungsform weisen daher wenigstens 90 % der Körner des im Spritzpulver verwendeten Hartstoffpulvers Größen von weniger als 2,0 µm auf. Bei einer weiteren Ausführungsform enthält das Hartstoffpulver auch einen gewissen Anteil an sehr feinen Pulvern, bei denen nur etwa 10 % des Hartstoffpulvers Größen von weniger als 15 nm aufweisen, so dass zwischen den größeren Hartstoffkörnern keine reine Metallmatrix vorliegt, sondern eine Metallmatrix mit einem gewissen Grundanteil an feinsten Hartstoffen. Hierdurch wird die Härte der Metallmatrix zusätzlich erhöht.

Bei einer vorteilhaften Ausführungsform wird ein Hartstoffpulver mit einer sehr engen Korngrößenverteilung von -0,8/+0,5 µm verwendet, wodurch eine gleichmäßige Verteilung der Hartstoffkörner in der Metallmatrix der Cermet-Beschichtung erreicht und Inhomogenitäten in der Verschleißfestigkeit der Beschichtung vermieden werden.

Zur guten Einbindung der Hartstoffpartikel muss die Metallmatrix der Cermet-Beschichtung zähe Eigenschaften aufweisen. Als Werkstoffe für die Ausbildung des Metallpulvers eignen sich zum Beispiel Eisen, Cobalt, Kupfer, Nickel und Chrom. Bevorzugt werden jedoch Hartmetalllegierungen auf Basis dieser Stoffe, wobei Nickel sowie Nickel-Chrom-Legierungen, Cobalt-Chrom-Legierungen und Nickel-Kobalt-Chrom-Legierungen besonders bevorzugt werden. Es können auch andere Materialen zur Ausbildung des Metallpulvers verwendet werden, jedoch sollten wenigstens 80 % des Metallpulvers aus einem oder mehreren der angegebenen Materialien bestehen.

Als Werkstoffe zur Ausbildung des Hartstoffpulvers können Carbide, Nitride, Carbonitride, Boride und keramische Metalloxide verwendet werden. Als Carbide können reine Carbide und Mischcarbide verwendet werden, wobei die Verwendung von Carbiden und Mischcarbiden der Elemente Wolfram (W), Chrom (Cr), Vanadium (V), Tantal (Ta), Titan (Ti), Molybdän (Mo), Niob (Nb) und Bor (B) bevorzugt ist. Die in dem Hartstoffpulver des Spritzpulvers verwendeten Carbide weisen nach einer Ausführungsform vorzugsweise eine Korngrößenverteilung von -1,0/+0,4 µm und besonders bevorzugt von -0,8/+0,6 µm auf. Damit variiert die Größe der Hartstoffkörner in der Cermet-Beschichtung nur sehr gering, wodurch die Belastung der Cermet-Beschichtungsoberfläche gleichmäßig über die darin eingebetteten Hartstoffkörner abgeleitet wird. Bei Verwendung keramischer Metalloxide als Werkstoff für die Ausbildung des Hartstoffpulvers werden Metalloxide bevorzugt, die aus den Elementen Chrom (Cr), Aluminium (Al), Titan (Ti), Yttrium (Y) und Zirkon (Zr) gebildet sind, also insbesondere Cr₂O₃, Al₂O₃, TiO₂, Y₂O₃ und ZrO₂. Für die keramischen Metalloxidkörner im Hartstoffpulver wird eine Korngrößenverteilung von -2,0 µm/+15 nm und insbesondere von -0,8/+0,5 µm bevorzugt.

Neben dem guten Dispersionsverhalten und der dadurch bewirkten gleichmäßigen Verteilung des Hartstoffanteils in der Cermet-Schicht ermöglichen die angegebenen Korngrößen für das Hartstoffpulver die Ausbildung einer glatteren Beschichtungsoberfläche, wodurch der Nachbearbeitungsaufwand zum Glätten der Beschichtungsoberfläche deutlich reduziert werden kann. Außerdem nimmt auch der während der Beschichtung anfallende Overspray ab, so dass eine effektivere Materialnutzung erzielt wird.

Die beschriebene Beschichtung mit einem wie oben erläuterten Spritzpulver wird vornehmlich für die Beschichtung von Rakelklingengrundkörpern aus Federstahl-, Edelstahl- und Nichteisen-Legierungen verwendet, wobei die Dicken der Rakelklingengrundkörper typischerweise zwischen 0,25 und 2,0 mm betragen. Die Dicken einer mit einem wie oben beschriebenen Spritzpulver aufgetragenen Beschichtungen 12 variiert je nach Anwendungsfall und kann Werte von 0,15 bis 300 µm annehmen. Es sei jedoch angemerkt, dass bei dünnen Schichten vorzugsweise Korngrößenverteilung verwendet werden, die nicht größer und möglichst kleiner als die zu erzielende Schichtdicke ist. Bei diesen Schichtdicken ist aufgrund der geringeren Größe der Hartstoffpartikel im Spritzpulver der Nachbearbeitungsaufwand zum Dünnen der Beschichtung geringer als mit den herkömmlichen Spritzmitteln.

## Patentansprüche

1. Verwendung eines Spritzpulvers für die Herstellung einer Cermet-Beschichtung (12) auf einer Rakelklingenoberfläche (11), wobei das Spritzpulver (30) ein Gemenge aus einem Metallpulver und einem Hartstoffpulver aufweist, bei dem wenigstens 90 Prozent der Körner des Metallpulvers Größen von weniger als 63 µm und vorzugsweise von weniger als 48 µm und wenigstens 90 Prozent der Körner des Hartstoffpulvers Größen von weniger als 2 µm aufweisen, worin wenigstens 90 Prozent der Körner des Metallpulvers Größen von mehr als 10 µm und vorzugsweise von mehr als 18 µm aufweisen und worin wenigstens 90 Prozent der Körner des Hartstoffpulvers Größen von mehr als 15 nm und vorzugsweise von mehr als 0,5 µm aufweisen.

2. Verwendung nach Anspruch 1, worin das Metallpulver zu wenigstens 80 Prozent Material ausgewählt aus einer Gruppe, die Eisen, Cobalt, Kupfer, Nickel, Chrom und deren Legierungen sowie Mischungen davon enthält.

3. Verwendung nach Anspruch 2, bei dem das Metallpulver zu wenigstens 80 Prozent Material ausgewählt aus einer Gruppe umfassend Ni, NiCr, CoCr und NiCoCr enthält.

4. Verwendung nach einem der vorangehenden Ansprüche, worin das Hartstoffpulver zu wenigstens 80 Prozent Material ausgewählt aus einer Gruppe umfassen Carbide, Nitride, Carbonitride, Boride und keramische Metalloxide enthält.

5. Verwendung nach Anspruch 4, worin das Hartstoffpulver Carbide umfasst, die ausgewählt sind aus der Gruppe umfassend Carbide und Mischcarbide der Elemente W, Cr, V, Ta, Ti, Mo, Nb und B.

6. Verwendung nach Anspruch 4 oder 5, worin das Hartstoffpulver Carbide umfasst und wenigstens 90 Prozent der Carbidkörner Größen von mehr als 0,4 µm und vorzugsweise von mehr als 0,6 µm und wenigstens 90 Prozent der Carbidkörner Größen von weniger als 1,0 µm und vorzugsweise von weniger als 0,8 µm aufweisen.

7. Verwendung nach Anspruch 4, worin das Hartstoffpulver keramische Metalloxide umfasst, die ausgewählt sind aus der Gruppe umfassend keramische Metalloxide der Elemente Cr, Al, Ti, Y und Zr sowie Mischungen daraus.

8. Verwendung nach einem der Ansprüche 4 bis 7, worin das Hartstoffpulver keramische Metalloxide umfasst und wenigstens 90 Prozent der Metalloxidkörner Größen von mehr als 15 nm und vorzugsweise von mehr als 0,5 µm und wenigstens 90 Prozent der Metalloxidkörner Größen von weniger als 2,0 µm und vorzugsweise von weniger als 0,8 µm aufweisen.

9. Rakelklinge mit einer Cermet-Beschichtung (12) hergestellt mit einem thermischen Beschichtungsverfahren unter Verwendung eines Spritzpulvers (30), wobei das Spritzpulver (30) ein Gemenge aus einem Metallpulver und einem Hartstoffpulver aufweist, bei dem wenigstens 90 Prozent der Körner des Metallpulvers Größen von weniger als 63 µm und vorzugsweise von weniger als 48 µm und wenigstens 90 Prozent der Körner des Hartstoffpulvers Größen von weniger als 2 µm aufweisen, worin wenigstens 90 Prozent der Körner des Metallpulvers Größen von mehr als 10 µm und vorzugsweise von mehr als 18 µm aufweisen und worin wenigstens 90 Prozent der Körner des Hartstoffpulvers Größen von mehr als 15 nm und vorzugsweise von mehr als 0,5 µm aufweisen, wobei die Dicke der Cermet-Beschichtung (12) wenigstens 0,15 µm und maximal 300 µm und vorzugsweise wenigstens 1 µm und maximal 200 µm beträgt.

## Claims

1. Use of a spray powder for producing a cermet coating (12) on a doctor blade surface (11), wherein the spray powder (30) comprises a mixture of a metal powder and a hard material powder, in which at least 90% of the particles of the metal powder have sizes of less than 63 µm and preferably less than 48 µm and at least 90% of the particles of the hard material powder have sizes of less than 2 µm, wherein at least 90% of the particles of the metal powder have sizes of more than 10 µm and preferably more than 18 µm and wherein at least 90% of the particles of the hard material powder have sizes of more than 15 nm and preferably more than 0.5 µm.

2. Use according to Claim 1, wherein the metal powder contains at least 80% of material selected from a group consisting of iron, cobalt, copper, nickel, chromium and alloys and mixtures thereof.

3. Use according to Claim 2, in which the metal powder contains at least 80% of material selected from a group consisting of Ni, NiCr, CoCr and NiCoCr.

4. Use according to any of the preceding claims, wherein the hard material powder contains at least 80% of material selected from a group consisting of carbides, nitrides, carbonitrides, borides and ceramic metal oxides.

5. Use according to Claim 4, wherein the hard material powder comprises carbides selected from the group consisting of carbides and mixed carbides of the elements W, Cr, V, Ta, Ti, Mo, Nb and B.

6. Use according to Claim 4 or 5, wherein the hard material powder comprises carbides and at least 90% of the carbide particles have sizes of more than 0.4 µm and preferably more than 0.6 µm and at least 90% of the carbide particles have sizes of less than 1.0 µm and preferably less than 0.8 µm.

7. Use according to Claim 4, wherein the hard material powder comprises ceramic metal oxides selected from the group consisting of ceramic metal oxides of the elements Cr, Al, Ti, Y and Zr and also mixtures thereof.

8. Use according to any of Claims 4 to 7, wherein the hard material powder comprises ceramic metal oxides and at least 90% of the metal oxide particles have sizes of more than 15 nm and preferably more than 0.5 µm and at least 90% of the metal oxide particles have sizes of less than 2.0 µm and preferably less than 0.8 µm.

9. Doctor blade having a cermet coating (12) produced by a thermal coating process using a spray powder (30), wherein the spray powder (30) comprises a mixture of a metal powder and a hard material powder, in which at least 90% of the particles of the metal powder have sizes of less than 63 µm and preferably less than 48 µm and at least 90% of the particles of the hard material powder have sizes of less than 2 µm, wherein at least 90% of the particles of the metal powder have sizes of more than 10 µm and preferably more than 18 µm and wherein at least 90% of the particles of the hard material powder have sizes of more than 15 nm and preferably more than 0.5 µm, with the thickness of the cermet coating (12) being at least 0.15 µm and not more than 300 µm and preferably at least 1 µm and not more than 200 µm.

## Revendications

1. Utilisation d'une poudre à pulvériser pour la fabrication d'un revêtement de cermet (12) sur une surface de lame de racle (11), la poudre à pulvériser (30) comprenant un mélange d'une poudre métallique et d'une poudre de substance dure, au moins 90 pour cent des grains de la poudre métallique présentant des tailles de moins de 63 µm et de préférence de moins de 48 µm, et au moins 90 pour cent des grains de la poudre de substance dure présentant des tailles de moins de 2 µm, au moins 90 pour cent des grains de la poudre métallique présentant des tailles de plus de 10 µm et de préférence de plus de 18 µm, et au moins 90 pour cent des grains de la poudre de substance dure présentant des tailles de plus de 15 nm et de préférence de plus de 0,5 µm.

2. Utilisation selon la revendication 1, dans laquelle la poudre métallique contient au moins 80 pour cent d'un matériau choisi dans un groupe qui comprend le fer, le cobalt, le cuivre, le nickel, le chrome et leurs alliages, ainsi que leurs mélanges.

3. Utilisation selon la revendication 2, dans laquelle la poudre métallique contient au moins 80 pour cent d'un matériau choisi dans un groupe comprenant Ni, NiCr, CoCr et NiCoCr.

4. Utilisation selon l'une quelconque des revendications précédentes, dans laquelle la poudre de substance dure contient au moins 80 pour cent d'un matériau choisi dans un groupe comprenant les carbures, les nitrures, les carbonitrures, les borures et les oxydes métalliques céramiques.

5. Utilisation selon la revendication 4, dans laquelle la poudre de substance dure comprend des carbures, qui sont choisis dans le groupe comprenant les carbures et les carbures métalliques des éléments W, Cr, V, Ta, Ti, Mo, Nb et B.

6. Utilisation selon la revendication 4 ou 5, dans laquelle la poudre de substance dure comprend des carbures et au moins 90 pour cent des grains de carbures présentent des tailles de plus de 0,4 µm et de préférence de plus de 0,6 µm, et au moins 90 pour cent des grains de carbures présentent des tailles de moins de 1,0 µm et de préférence de moins de 0,8 µm.

7. Utilisation selon la revendication 4, dans laquelle la poudre de substance dure comprend des oxydes métalliques céramiques, qui sont choisis dans le groupe comprenant les oxydes métalliques céramiques des éléments Cr, Al, Ti, Y et Zr, ainsi que leurs mélanges.

8. Utilisation selon l'une quelconque des revendications 4 à 7, dans laquelle la poudre de substance dure comprend des oxydes métalliques céramiques, et au moins 90 pour cent des grains d'oxydes métalliques présentent des tailles de plus de 15 nm et de préférence de plus de 0,5 µm, et au moins 90 pour cent des grains d'oxydes métalliques présentent des tailles de moins de 2,0 µm et de préférence de moins de 0,8 µm.

9. Lame de racle munie d'un revêtement de cermet (12) fabriqué par un procédé de revêtement thermique en utilisant une poudre à pulvériser (30), la poudre à pulvériser (30) comprenant un mélange d'une poudre métallique et d'une poudre de substance dure, au moins 90 pour cent des grains de la poudre métallique présentant des tailles de moins de 63 µm et de préférence de moins de 48 µm, et au moins 90 pour cent des grains de la poudre de substance dure présentant des tailles de moins de 2 µm, au moins 90 pour cent des grains de la poudre métallique présentant des tailles de plus de 10 µm et de préférence de plus de 18 µm, et au moins 90 pour cent des grains de la poudre de substance dure présentant des tailles de plus de 15 nm et de préférence de plus de 0,5 µm, l'épaisseur du revêtement de cermet (12) étant d'au moins 0,15 µm et d'au plus 300 µm, et de préférence d'au moins 1 µm et d'au plus 200 µm.
